# EUROPÄISCHE PATENTSCHRIFT

(11) **EP 1 750 284 B1**
(45) Veröffentlichungstag und Bekanntmachung des Hinweises auf die Patenterteilung: **29.05.2013**
(21) Anmeldenummer: 06012837.8
(22) Anmeldetag: 22.06.2006
(51) Int. Cl.: G21C 5/10, G21C 13/073, G21C 15/16

(54) **Abdeckelement für den Reaktorkern eines Siedewasserreaktors**
Cover element for the reactor core of a boiling water reactor
Elément de couverture pour le coeur d'un réacteur nucléaire à eau bouillante

(30) Priorität: 05.08.2005 DE 102005037589
(43) Veröffentlichungstag der Anmeldung: 07.02.2007
(73) Patentinhaber: AREVA NP GmbH, 91052 Erlangen (DE)
(72) Erfinder: Leibold, Friedrich, 91230 Happurg (DE)
(74) Vertreter: Tergau & Walkenhorst

(56) Entgegenhaltungen:
- EP-A- 0 244 844
- WO-A-98/09294
- CH-A- 554 585
- DE-A1- 1 564 783
- DE-A1- 19 519 903
- GB-A- 1 036 388
- JP-A- 3 279 895
- JP-A- 57 070 494
- US-A- 3 711 371
- US-A- 3 717 352
- US-A- 3 744 660
- US-A- 4 240 561
- US-A- 5 754 612
- US-A- 6 059 378

## Beschreibung

Die Erfindung betrifft ein Abdeckelement für den Reaktorkern einer kerntechnischen Anlage. Sie betrifft weiterhin einen ein derartiges Abdeckelement aufweisenden Kernreaktor. Ähnliche Vorrichtungen werden in US3711371 und in DE 1564783 gezeigt.

Siedewasserreaktoren weisen einen mit Kühlwasser befüllten Reaktordruckbehälter auf, in dem der aus Brennelementen gebildete Reaktorkern angeordnet ist. Der Reaktorkern ist üblicherweise von einem zylindrischen Kernmantel seitlich umschlossen. Die Brennelemente sind in einem so genannten Kerngitter gehaltert, das am oberen Ende des Kernmantels angeordnet ist. Nach oben hin ist der Reaktorkern mit einem in der Regel kalotten- oder halbkugelförmigen Kerndeckel verschlossen. In dem Kerndeckel ist eine Anzahl von Durchtrittsöffnungen eingebracht. Beim Betrieb des Kernreaktors wird das im Reaktordruckbehälter befindliche Kühlwasser aufgrund der im Reaktorkern ablaufenden Kernreaktion erhitzt und teilweise verdampft. Das auf diese Weise erzeugte Wasser-Dampf-Gemisch tritt durch die Durchtrittsöffnungen im Kerndeckel in die daran angeschlossenen so genannten Standrohre des Wasser-Dampf-Separators ein. Anschließend wird es in den Dampftrockner geleitet. Danach wird der unter hohem Druck und unter hoher Temperatur stehende, getrocknete Frischdampf über eine Frischdampfleitung aus dem Druckbehälter herausgeführt und zur Erzeugung elektrischer Energie einer an einen Generator gekoppelten Dampfturbine zugeleitet.

Der Kerndeckel unterliegt gewöhnlicherweise besonders hohen Anforderungen hinsichtlich seiner Druckfestigkeit und Dichtigkeit. Er ist daher in der Regel als monolithisches Schmiedeteil ausgeführt. Für Wartungsarbeiten am Reaktorkern und insbesondere für einen Austausch von Brennelementen muss der Kerndeckel zudem abnehmbar am Kernmantel bzw. am Kerngitter befestigt sein. Weiterhin ist für eine vorteilhafte Beeinflussung und Beruhigung der Dampfströmung vor deren Eintritt in die Standrohre des Wasser-Dampf-Separators zwischen dem Kerndeckel und dem Kerngitter ein hinreichend groß bemessener vertikaler Abstand vorgesehen. Dieser Abstand kann dadurch realisiert sein, dass an die kalottenförmige Deckelschale des Kerndeckels ein auch als Stützring bezeichneter Zwischenring angeformt ist, wobei der Zwischenring im Betriebszustand des Reaktors an seinem unteren Rand am Kerngitter oder am zylindrischen Kernmantel fixiert ist. Eine derartige Ausführung des Kerndeckels als monolithisches Schmiedeteil ist jedoch aufgrund seiner Größe und seiner komplexen Formgebung problematisch und mit hohen Herstellungskosten verbunden.

Der Erfindung liegt daher die Aufgabe zugrunde, ein Abdeckelement für den Reaktorkern einer kerntechnischen Anlage anzugeben, das bei den vorgegebenen geometrischen Randbedingungen und bei einfach und kostengünstig gehaltener Herstellung einen sicheren und dichten Verschluss des Reaktorkerns im Betriebszustand ermöglicht. Das Abdeckelement soll zudem bei Wartungs- oder Beladevorgängen leicht demontierbar sein und dabei gute Eingriffsmöglichkeiten in den Reaktorkern bieten. Diese Aufgabe wird erfindungsgemäß durch eine Anordnung nach Anspruch 1 gelöst.

Die Erfindung geht dabei von der Überlegung aus, dass das Abdeckelement im Hinblick auf einen vertretbaren Fertigungsaufwand zumindest zweiteilig ausgeführt sein sollte, wobei als separate Einzelteile ein Kerndeckel mit einer Deckelschale in Form einer abgeflachten Halbkugel (Kalotte) und ein passgenau mit dem Deckel verbindbarer Stützring vorgesehen sind. Die Verbindung zwischen den beiden Komponenten sollte derart beschaffen sein, dass der Stützring beim Demontieren des Kerndeckels, etwa zum Brennelementwechsel, in einem Arbeitsgang gemeinsam mit dem Kerndeckel aus dem Reaktordruckbehälter gehoben werden kann, so dass sich besonders gute Zugriffsmöglichkeiten in den Reaktorkernen mit entsprechend großen Bewegungsfreiräumen ergeben.

Grundsätzlich könnte der Kerndeckel zu diesem Zweck mit dem Stützring verschweißt sein. Dazu sind aber großvolumige Schweißnähte erforderlich, die mit zeit- und kostenaufwendigen Schweißarbeiten verbunden sind und darüber hinaus möglicherweise eine erhöhte Korrosionsanfälligkeit aufweisen. Bedingt durch den Schweißvorgang wird Wärme in das Material des Kerndeckels und des Stützrings eingebracht. Dieser Wärmeeintrag kann sich unter Umständen derart auswirken, dass die Anfälligkeit des Materials für Korrosion, insbesondere für Spannungsrisskorrosion, zunimmt. Eine Schweißnaht zwischen dem Kerndeckel und dem darunter liegenden Stützring könnte daher für den Betreiber des Kernkraftwerkes mit einem hohen Aufwand an wiederkehrenden Sichtprüfungen verbunden sein. Statt einer auf Stoffschluss ausgerichteten Schweißnaht zur Verbindung der beiden Komponenten ist daher bei dem hier vorliegenden Konzept eine alternative, nämlich kraftschlüssige und/oder formschlüssige Verbindung oder Befestigung vorgesehen. Insbesondere in Kernnähe mit vergleichsweise hoher Strahlenbelastung ist auf diese Weise die Korrosionsanfälligkeit reduziert und der Kontrollaufwand herabgesetzt.

Sowohl der Kerndeckel als auch der Stützring sind jeweils als monolithische Schmiedeteile ausgeführt, wobei insbesondere austenitische Werkstoffe zum Einsatz kommen können.

Das Abdeckelement ist derart konstruiert, dass der Kerndeckel in der Betriebsposition mit seinem kreisförmigen Rand auf der ihm zugewandten Stirnseite des Stützringes aufliegt. Im Regelfall, d. h. während des Betriebs des Kernreaktors, werden nur die stirnseitigen Auflageflächen des Stützringes durch das Eigengewicht des Kerndeckels sowie gegebenenfalls durch den Anpressdruck von auf einen Dampftrockner oberhalb des Kerndeckels einwirkenden Haltefedern belastet. Von oben aufgebrachte Verspannkräfte werden also direkt über die Auflageflächen nach unten zum Stützring durchgeleitet, ohne dabei die zur Bewerkstelligung der kraft- oder formschlüssigen Verbindung vorgesehenen Verbindungselemente zu belasten. Derartige Verbindungselemente müssen somit nur während des Montage- oder Demontagevorgangs des Kerndeckels nennenswerte Haltekräfte übertragen bzw. bereitstellen. Sie verhindern insbesondere auch ein gegenseitiges Verdrehen der beiden miteinander verbundenen Komponenten, etwa wenn der Kerndeckel nach einem Brennelementwechsel wieder in seine Betriebsposition auf das Kerngitter herabgelassen und dabei zentriert wird.

In einer bevorzugten Weiterbildung umfasst der Kerndeckel eine Deckelschale und einen an die Deckelschale angeformten Anschlussring, wobei der Anschlussring und der unter ihm liegende Stützring an ihren einander zugewandten Enden jeweils einen ringförmigen Absatz aufweisen, derart, dass die beiden Absätze miteinander verzahnt sind. Indem sich die Absätze oder Stufen in der beschriebenen Art wechselseitig hintergreifen, ist ein selbstzentrierendes Zusammenbringen von Kerndeckel und Stützring bei der Fertigung bzw. Montage des Abdeckelementes gewährleistet. Der Anschlussring kann winklig von der Deckelschale abstehen und eine Längsausdehnung aufweisen. Es ist aber auch möglich, den am Kerndeckel angeordneten Absatz direkt in den Rand der Deckelschale zu integrieren. Schließlich kann auch eine mehrfache Stufung oder Verzahnung vorgesehen sein.

Vorteilhafterweise sind die beiden Absätze in ihrer Form derart aufeinander abgestimmt, dass der Anschlussring und der Stützring über die gesamte Querausdehnung hinweg spaltfrei aneinander liegen. Durch einen derart passgenauen Sitz wird eine hohe Dichtigkeit der Anordnung erreicht. Weiterhin werden die vom Kerndeckel auf den Stützring übertragenen Auflage- und Verspannungskräfte gleichmäßig über die gesamte vorhandene Querschnittsfläche der beiden miteinander verbundenen Komponenten verteilt.

In einer bevorzugten Ausführung ist die seitliche Versetzung der Absätze derart gewählt, dass der am Stützring angeordnete Absatz den Absatz des Anschlussrings von außen umgreift und somit eine Einfassung für das innen liegende Teil bildet.

Zur festen und dauerhaften Verbindung des Kerndeckels mit dem Stützring ist vorzugsweise eine Anzahl von Haltestiften oder Bolzen vorgesehen, wobei vorteilhafterweise der jeweilige Haltestift oder Bolzen in eine die Absätze von Anschlussring und Stützring durchdringende Bohrung eingebracht ist. Die jeweilige Bohrung ist bevorzugt senkrecht zur Achse des Stützringes, d. h. in der Betriebsposition geodätisch horizontal, ausgerichtet. Wie bereits oben erwähnt, müssen die Bolzen nur dann Kräfte aufnehmen, wenn das Abdeckelement, also der Kerndeckel mitsamt dem Stützring, aus dem Reaktordruckbehälter herausgehoben oder anschließend wieder in diesen eingesetzt wird. Dazu wird das Abdeckelement mit einer am Kerndeckel angreifenden kranartigen Vorrichtung angehoben. Der Stützring "hängt" dann gewissermaßen am Kerndeckel. Die in die Bohrungen eingebrachten Bolzen oder Haltestifte werden dabei überwiegend auf Scherung beansprucht.

Vorteilhafterweise sind die Haltestifte oder Bolzen gegen Verlagerung gesichert, wobei auf konventionelle Sicherungsmittel wie beispielsweise Sicherungsstifte oder dergleichen zurückgegriffen werden kann. Es ist insbesondere auch möglich, die Haltebolzen zur Sicherung mit dem Kerndeckel oder mit dem Stützring zu verschweißen.

In zusätzlicher vorteilhafter Ausgestaltung kann der Kerndeckel mit dem Stützring auch durch eine Anzahl von Schrauben oder Gewindebolzen kraftschlüssig verbunden sein. In einer besonders bevorzugten Ausgestaltung greift die jeweilige Befestigungsschraube oder der Gewindebolzen durch die Deckelschale des Kerndeckels hindurch und ist stützringseitig in einer an dem Stützring angeformten oder angeschweißten Befestigungskonsole fixiert. Vorteilhafterweise weist die Befestigungsschraube oder der Gewindebolzen ein Außengewinde auf. Die Befestigungskonsole und gegebenenfalls auch der Kerndeckel weisen dementsprechend eine mit einem korrespondierenden Innengewinde versehene Ausnehmung für die Schraube oder den Gewindebolzen auf. Vorteilhafterweise ist die Schraube oder der Gewindebolzen parallel zur Achse des Stützringes, also in der Betriebsposition vertikal ausgerichtet, so dass beim Anheben des Abdeckelementes eine Beanspruchung der Verbindungselemente auf Zug auftritt. Die Befestigungsschraube oder der Gewindebolzen kann auch an seinem oberen, deckelseitigen Ende durch eine Mutter oder eine Kontermutter gesichert sein. Zusätzlich kann eine Sicherung der Befestigungsschraube oder des Gewindebolzens durch Verschweißung mit dem Kerndeckel und/oder mit dem Stützring bzw. mit dessen Befestigungskonsole vorgesehen sein.

Das Abdeckelement kommt zweckmäßigerweise bei einem Siedewasserreaktor zum Einsatz und verschließt dort im Betriebszustand den Reaktordruckbehälter am oberen Ende.

Die mit der Erfindung erzielten Vorteile bestehen insbesondere darin, dass zwei jeweils vergleichsweise einfach herzustellende Schmiedeteile durch geeignete Verbindungselemente kraft- und/oder formschlüssig zu einem komplexeren Abdeckelement zusammengefügt werden, das bei Wartungsarbeiten am Reaktorkern und insbesondere bei der Bestückung des Kerngitters mit Brennelementen in einem Arbeitsgang und als eine Einheit demontiert werden kann. Aufgrund der durch Kraft- und/oder Formschluss bewirkten Verbindung zwischen dem Kerndeckel und dem Stützring entfallen korrosionsanfällige großvolumige Schweißnähte und damit zusammenhängende, wiederkehrende Inspektions- und Ausbesserungsarbeiten.

Ein Ausführungsbeispiel der Erfindung wird anhand einer Zeichnung näher erläutert. Darin zeigen:
- Fig. 1: einen Ausschnitt aus einem Querschnitt durch ein Abdeckelement für den Reaktorkern eines Siedewasserreaktors,
- Fig. 2: eine alternative Ausführung des Abdeckelements, und
- Fig. 3: einen Querschnitt durch den Kerndeckel eines Abdeckelements.

Gleiche Teile sind in allen Figuren mit denselben Bezugszeichen versehen.

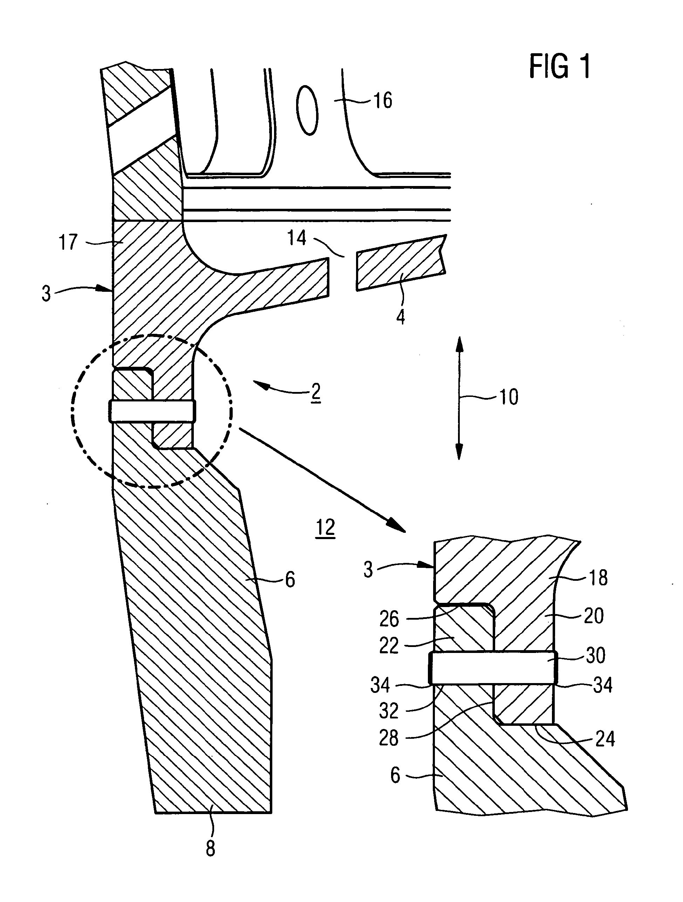

Fig. 1 zeigt ausschnittsweise einen Querschnitt durch ein Abdeckelement 2 für den Reaktorkern eines Siedewasserreaktors, wobei in der rechten Figurenhälfte das in der linken Figurenhälfte mit dem gestrichelten Kreis markierte Detail dargestellt ist. Das Abdeckelement 2 ist im Inneren eines hier nicht dargestellten Reaktordruckbehälters angeordnet und verschließt in seiner Betriebsposition den Kernbereich mit den darin befindlichen Brennelementen nach oben hin. Das Abdeckelement 2 umfasst einen Kerndeckel 3 mit einer sphärisch gekrümmten, abgeflachten Deckelschale 4 und einen mit der Deckelschale 4 verbundenen Stützring 6 von im Wesentlichen zylindrischer Gestalt. Der Stützring 6 ist an seinem unteren Rand 8 lösbar an einem zur Aufnahme von Brennelementen vorgesehenen Kerngitter montiert. Das Kerngitter ist nicht gezeigt, da die Details der Befestigung hier nicht weiter interessieren.

Durch den zwischen dem Kerngitter und dem Kerndeckel 3 eingesetzten Stützring 6 ist die Distanz in Längsrichtung 10 zwischen der kuppelartigen Deckelschale 4 und dem darunter befindlichen Kernbereich mit den Brennelementen gegenüber einer Ausführung ohne Stützring 6 vergrößert. In dem von dem zylindrischen Stützring 6 umschlossenen Dampfraum oder Gemischraum 12 kann sich das im Reaktordruckbehälter während des Reaktorbetriebs bildende Wasser-Dampf-Gemisch sammeln und vergleichmäßigen, bevor es durch im Kerndeckel 3 angeordnete Durchtrittsöffnungen 14 in die nach oben hin sich anschließenden Standrohre eines hier nicht weiter dargestellten Wasser-Dampf-Separators eintritt. Am Kerndeckel 3 ist weiterhin ein ringförmiger Anschlussflansch 17 angeformt, an dem eine als Auflage für einen hier nicht weiter dargestellten Dampftrockner dienende Stützkonstruktion 16 befestigt ist.

An die Deckelschale 4 des Kerndeckels 3 ist ein winklig nach unten abgebogener zylindrischer Anschlussring 18 angeformt, der an seinem unteren Ende einen ringförmigen Absatz 20 aufweist. Dieser Absatz 20 ist an einen ebenfalls ringförmigen, korrespondierenden Absatz 22 am oberen Rand des Stützrings 6 derart angepasst, dass sich im Querschnitt betrachtet eine einfache Verzahnung ausbildet. Die beiden Absätze 20, 22 weisen jeweils die gleiche Höhe auf, so dass sowohl die inneren Auflageflächen 24 als auch die höhenversetzten äußeren Auflageflächen 26 von Stützring 6 und Anschlussring 18 plan aufeinander liegen. Die Auflageflächen 24, 26 haben jeweils eine kreisringförmige Gestalt und liegen jeweils in einer horizontalen Ebene. Die Stufung ist rechtwinklig ausgeführt, derart, dass auch die vertikal orientierten, eine Zylindermantelfläche ausbildenden Kontaktflächen 28 der beiden Absätze 20, 22 spaltfrei aneinander liegen. Die Kanten der Absätze 20, 22 können dabei leicht angeschrägt oder abgerundet sein. Im Ausführungsbeispiel besitzen beide Absätze 20, 22 die gleiche Breite, so dass sich die Auflagekräfte gleichmäßig auf den oberen (äußeren) und auf den unteren (inneren) Kreisring verteilen.

Zur dauerhaften Verbindung und Sicherung der Anordnung ist im Ausführungsbeispiel gemäß Fig. 1 eine Anzahl von in Umfangsrichtung um das zylindrische Gebilde herum verteilten Bolzen 30 vorgesehen. Jeder der Bolzen 30 sitzt passgenau in einer korrespondierenden Ausnehmung oder Bohrung 32, die in radialer Richtung durch die beiden Absätze 20, 22 von Stützring 6 und Anschlussring 18 verläuft. Die Länge des jeweiligen Bolzens 30 ist etwas größer als die durch die gesamte Wandstärke in diesem Bereich gegebene Länge der Bohrung 32. Zur Sicherung des Bolzens 30 gegen Verlagerung ist dieser an der äußeren kreisförmigen Begrenzungskante der Bohrung 32 mit dem jeweiligen Absatz 20, 22 verschweißt (Sicherungsnaht 34).

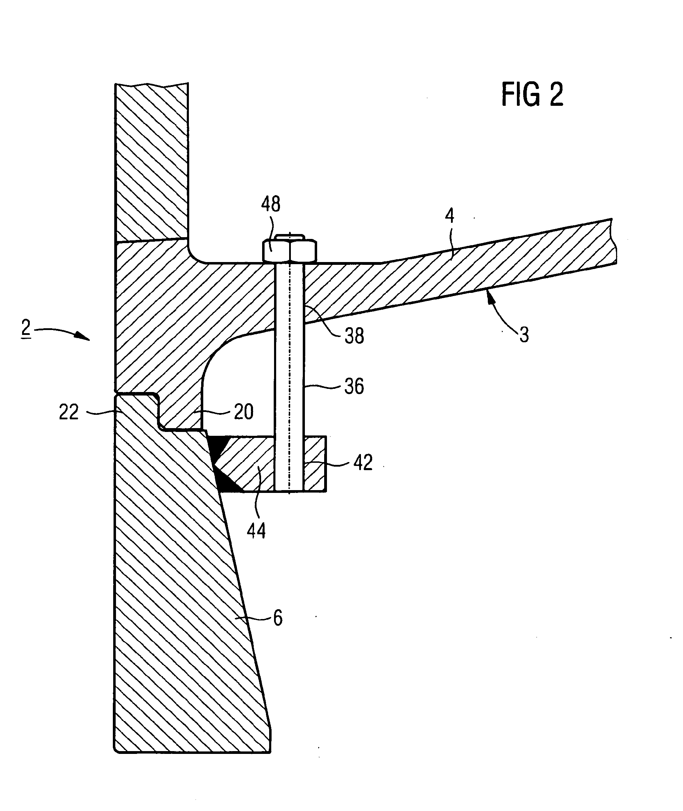

Im zweiten Ausführungsbeispiel gemäß Fig. 2 ist die Befestigung des Kerndeckels 3 am Stützring 6 insofern abgeändert, als ein länglicher Gewindebolzen 36 durch eine zugeordnete Ausnehmung 38 in der Deckelschale 4 des Kerndeckels 3 durchgreift und an seinem unteren Ende in einer mit einem Innengewinde versehenen Ausnehmung 42 in einer Befestigungskonsole 44 des Stützringes 6 gehalten ist. Die ins Zylinderinnere hineinragende Befestigungskonsole 44 ist mit der Innenwand des Stützrings 6 verschweißt. Die Befestigungskonsole 44 kann aber zur Vermeidung von Schweißnähten auch angeschmiedet sein. An seinem oberen Ende, das aus der Deckelschale 4 herausragt, ist der Gewindebolzen 36 durch eine Mutter 48 gesichert. Ähnlich wie im vorherigen Ausführungsbeispiel kann durch Verschweißung des Gewindebolzens 36 mit dem Kerndeckel 3 oder mit der Befestigungskonsole 44 eine zusätzliche Sicherung des Gewindebolzens 36 realisiert werden.

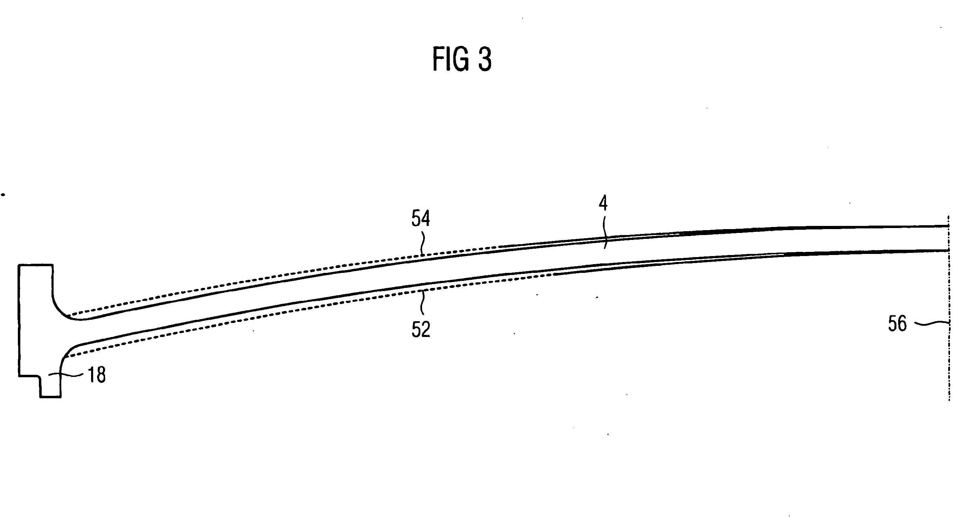

Bei dem hier vorgestellten Konzept kann es insbesondere aus statischen Gründen zweckmäßig sein, von der bislang üblichen gleichmäßigen Dicke der Deckelschale 4 abzusehen. Statt dessen kann es zur Erreichung einer besonders hohen Stabilität und Steifigkeit vorteilhaft sein, wie in Fig. 3 dargestellt, die Wandstärke der Deckelschale 4 von ihrem Zentrum ausgehend nach außen hin kontinuierlich zu vergrößern. Das heißt, in der Nähe des zylindrischen Anschlussrings 18 ist die Dicke der Deckelschale 4 größer als in der Mitte. Dies kann beispielsweise dadurch realisiert sein, dass die Mittelpunkte der der Innenseite 52 und der Außenseite 54 der Deckelschale 4 zugeordneten Radien entlang der Mittelachse 56 versetzt bzw. exzentrisch angeordnet sind. Damit ergibt sich die in Fig. 3 durch gepunktete Linien dargestellte vorteilhafte Form der Deckelschale 4, die von der bislang üblichen Ausführung gemäß der durchgezogenen Linien abweicht.

### Bezugszeichenliste

- 2: Abdeckelement
- 3: Kerndeckel
- 4: Deckelschale
- 6: Stützring
- 8: unterer Rand
- 10: Längsrichtung
- 12: Dampfraum / Gemischraum
- 14: Durchtrittsöffnungen
- 16: Stützkonstruktion
- 17: Anschlussflansch
- 18: Anschlussring
- 20: ringförmiger Absatz
- 22: ringförmiger Absatz
- 24: Auflageflächen
- 26: Auflageflächen
- 28: Kontaktflächen
- 30: Bolzen
- 32: Bohrung
- 34: Sicherungsnaht
- 36: Gewindebolzen
- 38: Ausnehmung
- 42: Ausnehmung
- 44: Befestigungskonsole
- 48: Mutter
- 52: Innenseite
- 54: Außenseite
- 56: Mittelachse

## Patentansprüche

1. Siedewasserreaktor mit einem innerhalb eines Reaktordruckbehälters angeordneten Reaktorkern, der im Betriebszustand nach oben hin durch ein für Wartungszwecke abnehmbares, innerhalb des Reaktordruckbehälters angeordnetes Abdeckelement (2) verschlossen ist, wobei
● das Abdeckelement (2) aus einem Kerndeckel (3) und einem separaten Stützring (6) zusammengefügt ist,
● der Kerndeckel (3) auf dem Stützring (6) aufliegt,
● der Kerndeckel (3) und der Stützring (6) jeweils monolithische Schmiedeteile sind,
● der Stützring (6) kraftschlüssig und/oder formschlüssig mit dem Kerndeckel (3) verbunden ist, so daß
● das Abdeckelement (2) bei Wartungsarbeiten am Reaktorkern als eine Einheit demontiert werden kann.

2. Siedewasserreaktor nach Anspruch 1, wobei der Stützring (6) einen Gemischraum (12) umschließt, in dem sich im Reaktorbetrieb bildendes Wasser-Dampf-Gemisch sammelt und vergleichmäßigt.

3. Siedewasserreaktor nach einem der Ansprüche 1 bis 2, dessen Kerndeckel (3) eine Deckelschale (4) und einen an die Deckelschale (4) angeformten Anschlussring (18) umfasst, wobei der Anschlussring (18) und der Stützring (6) an ihren einander zugewandten Enden jeweils einen ringförmigen Absatz (20, 22) aufweisen, derart, dass die beiden Absätze (20, 22) miteinander verzahnt sind.

4. Siedewasserreaktor nach Anspruch 3, bei dem die beiden Absätze (20, 22) in ihrer Form derart aufeinander abgestimmt sind, dass der Anschlussring (18) und der Stützring (6) über die gesamte Querausdehnung hinweg spaltfrei aneinander liegen.

5. Siedewasserreaktor nach Anspruch 3 oder 4, bei dem der am Stützring (6) angeordnete Absatz (22) den Absatz (20) des Anschlussrings (18) von außen umgreift.

6. Siedewasserreaktor nach einem der Ansprüche 1 bis 5, bei dem zur Verbindung des Kerndeckels (3) mit dem Stützring (6) eine Anzahl von Haltestiften oder Bolzen (30) vorgesehen ist.

7. Siedewasserreaktor nach Anspruch 6, bei dem der jeweilige Haltestift oder Bolzen (30) in eine die Absätze (20, 22) von Anschlussring (18) und Stützring (6) durchdringende Bohrung (32) eingebracht ist.

8. Siedewasserreaktor nach Anspruch 7, bei dem die jeweilige Bohrung (32) senkrecht zur Achse des Stützrings (6) ausgerichtet ist.

9. Siedewasserreaktor nach einem der Ansprüche 1 bis 8, bei dem zur Verbindung des Kerndeckels (3) mit dem Stützring (6) eine Anzahl von Befestigungsschrauben oder Gewindebolzen (36) vorgesehen ist.

10. Siedewasserreaktor nach Anspruch 9, bei dem die jeweilige Befestigungsschraube oder der Gewindebolzen (36) durch die Deckelschale (4) des Kemdeckels (3) hindurchgreift und in einer am Stützring (6) angeordneten Befestigungskonsole (44) fixiert ist.

11. Siedewasserreaktor nach Anspruch 9 oder 10, bei dem die jeweilige Befestigungsschraube oder der Gewindebolzen (36) parallel zur Achse des Stützrings (6) ausgerichtet ist.

12. Siedewasserreaktor nach einem der Ansprüche 9 bis 11, bei dem die jeweilige Befestigungsschraube oder der Gewindebolzen (36) an ihrem/seinem oberhalb der Deckelschale (4) liegenden Ende durch eine Mutter (48) gesichert ist.

13. Siedewasserreaktor nach einem der Ansprüche 6 bis 12, bei dem der jeweilige Haltestift oder Bolzen (30) oder die Schraube oder der Gewindebolzen (36) gegen Verlagerung gesichert ist.

14. Siedewasserreaktor nach Anspruch 13, bei dem der jeweilige Haltestift oder Bolzen (30) oder die Schraube oder der Gewindebolzen (36) mit dem Kerndeckel (3) und/oder mit dem Stützring (6) verschweißt ist.

## Claims

1. A boiling-water reactor having a reactor core arranged inside the reactor pressure vessel, which in the operating state is closed towards the top by a covering element (2) which can be removed for maintenance purposes and is arranged inside the reactor pressure vessel, wherein
● the covering element (2) is made up of a core lid (3) joined with a separate bearing ring (6),
● the core lid (3) rests on the bearing ring (6),
● both the core lid (3) and the bearing ring (6) are monolithic forged pieces,
● the bearing ring (6) is connected with the core lid (3) in a force-fitted and/or form-fitted manner, so that
● the covering element (2) can be dismounted as one unit at the reactor core in case of maintenance works.

2. The boiling-water reactor of claim 1, wherein the bearing ring (6) surrounds a mixture chamber (12) in which a water/vapor mixture developing during the operation of the reactor is collected and homogenized.

3. The boiling-water reactor of any of claims 1 to 2, whose core lid (3) comprises a lid shell (4) and a connection ring (18) moulded onto the lid shell (4), the connection ring (18) and the bearing ring (6) each including on their ends facing each other an annular shoulder (20, 22), such that the two shoulders (20, 22) interlock each other.

4. The boiling-water reactor of claim 3, wherein the shapes of the two shoulders (20, 22) are adapted to each other in such a way that the connection ring (18) and the bearing ring (6) contact each other gaplessly over the entire transverse extension.

5. The boiling-water reactor of claim 3 or 4, wherein the shoulder (22) arranged on the bearing ring (6) externally encompasses the shoulder (20) of the connection ring (18).

6. The boiling-water reactor of any of claims 1 to 5, wherein a plurality of retaining pins or studs (30) are provided for connecting the core lid (3) with the bearing ring (6).

7. The boiling-water reactor of claim 6, wherein the respective retaining pin or stud (30) is inserted into a hole (32) passing through the shoulders (20, 22) of the connection ring (18) and the bearing ring (6).

8. The boiling-water reactor of claim 7, wherein the respective hole (32) is oriented normal to the axis of the bearing ring (6).

9. The boiling-water reactor of any of claims 1 to 8, wherein a plurality of fastening screws or threaded bolts (36) are provided for connecting the core lid (3) with the bearing ring (6).

10. The boiling-water reactor of claim 9, wherein the respective fastening screw or threaded bolt (36) passes through the lid shell (4) of the core lid (3 and is fixed in a fastening bracket (44) arranged on the bearing ring (6).

11. The boiling-water reactor of claim 9 or 10, wherein the respective fastening screw or threaded bolt (36) is oriented parallel to the axis of the bearing ring (6).

12. The boiling-water reactor of any of claims 9 to 11, wherein the respective fastening screw or threaded bolt (36) is locked at its end situated above the lid shell (4) by a nut (48).

13. The boiling-water reactor of any of claims 6 to 12, wherein the respective retaining pin or stud (30) or the screw or threaded bolt (36) is locked against dislocation.

14. The boiling-water reactor of claim 13, wherein the respective retaining pin or stud (30) or the screw or threaded bolt (36) is welded together with the core lid (3) and/or with the bearing ring (6).

## Revendications

1. Réacteur à eau bouillante ayant un coeur de réacteur disposé à l'intérieur d'une cuve du réacteur, qui, en état de fonctionnement, est fermée vers le haut par un élément de recouvrement (2) qui peut être enlevé pour des fins d'entretien et est disposé à l'intérieur de la cuve du réacteur, dans lequel
● l'élément de recouvrement (2) se compose d'un couvercle du coeur (3) joint avec une bague d'appui (6) séparée,
● le couvercle du coeur (3) s'appuie sur la bague d'appui (6),
● et le couvercle du coeur (3) et la bague d'appui (6) sont des pièces forgées monolithiques,
● la bague d'appui (6) est reliée avec le couvercle du coeur (3) par engagement à force et/ou par engagement positif, de manière que
● l'élément de recouvrement (2) peut être démonté comme une seule unité au coeur de réacteur pour des travaux d'entretien.

2. Réacteur à eau bouillante selon la revendication 1, dans lequel la bague d'appui (6) entoure une chambre de mélange (12) dans laquelle un mélange d'eau et de vapeur qui se forme pendant le fonctionnement du réacteur est accumulé et homogénéisé.

3. Réacteur à eau bouillante selon l'une quelconque des revendications 1 à 2, dont le couvercle du coeur (3) comprend une coquille de couvercle (4) et une bague de raccordement (18) moulée sur la coquille de couvercle (4), la bague de raccordement (18) et la bague d'appui (6) comprenant chacune à leurs bouts en regard l'un de l'autre un épaulement annulaire (20, 22), de façon que les deux épaulements (20, 22) sont endentés.

4. Réacteur à eau bouillante selon la revendication 3, dans lequel les formes des deux épaulements (20, 22) sont adaptées l'une à l'autre, de manière que la bague de raccordement (18) et la bague d'appui (6) sont en contact l'une avec l'autre sans écartement sur l'extension transversale entière.

5. Réacteur à eau bouillante selon la revendication 3 ou 4, dans lequel l'épaulement (22) disposé sur la bague d'appui (6) enveloppe l'épaulement (20) de la bague de raccordement (18) à l'extérieur.

6. Réacteur à eau bouillante selon l'une quelconque des revendications 1 à 5, dans lequel une pluralité de goupilles de blocage ou de boulons (30) est prévue pour relier le couvercle du coeur (3) avec la bague d'appui (6).

7. Réacteur à eau bouillante selon la revendication 6, dans lequel la goupille de blocage ou le boulon (30) en question est inséré dans un trou (32) passant au travers des épaulements (20, 22) de la bague de raccordement (18) et de la bague d'appui (6).

8. Réacteur à eau bouillante selon la revendication 7, dans lequel le trou (32) en question est orienté perpendiculairement à l'axe de la bague d'appui (6).

9. Réacteur à eau bouillante selon l'une quelconque des revendications 1 à 8, dans lequel une pluralité de vis de fixation ou de boulons filetés (36) est prévue pour relier le couvercle du coeur (3) avec la bague d'appui (6).

10. Réacteur à eau bouillante selon la revendication 9, dans lequel la vis de fixation ou le boulon fileté (36) en question passe au travers de la coquille de couvercle (4) du couvercle du coeur (3) et est fixé dans une console de fixation (44) disposée sur la bague d'appui (6).

11. Réacteur à eau bouillante selon la revendication 9 ou 10, dans lequel la vis de fixation ou le boulon fileté (36) en question est orienté parallèlement à l'axe de la bague d'appui (6).

12. Réacteur à eau bouillante selon l'une quelconque des revendications 9 à 11, dans lequel la vis de fixation ou le boulon fileté (36) en question est bloqué à son bout situé au-dessus de la coquille de couvercle (4) par un écrou (48).

13. Réacteur à eau bouillante selon l'une quelconque des revendications 6 à 12, dans lequel la goupille de blocage ou le boulon (30) ou la vis ou le boulon fileté (36) en question est bloqué contre déplacement

14. Réacteur à eau bouillante selon la revendication 13, dans lequel la goupille de blocage ou le boulon (30) ou la vis ou le boulon fileté (36) en question est soudé avec le couvercle du coeur (3) et/ou avec la bague d'appui (6).
